# EUROPEAN PATENT APPLICATION

(11) **EP 4 785 900 A2**
(43) Date of publication of application: **05.08.2026**
(21) Application number: 26155350.7
(22) Date of filing: 30.01.2026
(51) Int. Cl.: A61C 7/14

(54) **ORTHODONTIC BRACKET SYSTEM**

(30) Priority: 31.01.2025 US 202563752241 P
(71) Applicant: Eslamiamirabadi, Gholamreza, 1533735911 Tehran (IR); Eslamiamirabadi, Negin, Montreal Quebec H2S 3H3 (CA)
(72) Inventor: Eslamiamirabadi, Gholamreza, 1533735911 Tehran (IR); Eslamiamirabadi, Negin, Montreal Quebec H2S 3H3 (CA)
(74) Representative: Müller Hoffmann & Partner

(57) **Abstract**

The present invention relates to an orthodontic bracket system adapted to minimize forces of resistance, enhance treatment efficiency, and reduce overall treatment duration. The bracket may comprise three tie wings, with two positioned coronally and one gingivally at approximately the midpoint between them. The tie wings' slot portions are rounded to reduce friction, binding, and notching. The bracket slot base may comprise two semicylindrical prominences, aiming at reducing the contact area between the archwire and the slot. The orthodontic system is compatible with various orthodontic materials, including but not limited to stainless steel, titanium, ceramics, and medical-grade polymers.

## Description

### CROSS-REFERENCE TO RELATED APPLICATIONS

The present patent application claims the benefits of priority of United States Provisional Patent Application No. 63/752,241, entitled "ORTHODONTIC BRACKET SYSTEM", and filed at the United States Patent and Trademark Office on January 31, 2025.

### FIELD OF THE INVENTION

The present invention generally relates to the field of orthodontics, and more specifically to braces and any other teeth alignment apparatus.

### BACKGROUND OF THE INVENTION

Orthodontics is a specialty in dentistry that concerns diagnosing, preventing and correcting patients' malocclusion, which is, the misalignment of teeth, which can interfere with the jaws and mouth's function and facial and dental appearance.

Orthodontic braces are an orthodontic apparatus commonly used for correcting dental and skeletal misalignments during an orthodontic treatment, by exerting mechanical forces to cause movement, repositioning, and consequently, alignment of the teeth. A conventional orthodontic braces apparatus includes (i) orthodontic brackets, which are bonded to the teeth using an adhesive, (ii) an orthodontic archwire, which is placed within the slots of the brackets, and (iii) ligature, which secures the archwire in the bracket slot, applying force to the teeth via the brackets. Ligatures fixing the archwire into the bracket slot include elastic or metal ligatures, which are wrapped around the bracket wings to put force on the archwire into the slot, as well as caps of self-ligatory brackets which secure the archwire in the slot when closed. The force applied to the tooth via the bracket-archwire system introduces a reactionary force from the root of the tooth to its adjacent bony structures. This reactionary force induces bone absorption and resorption around the roots, leading to the movement and repositioning of the tooth in the jaws.

Orthodontic brackets are temporarily bonded to the tooth and provide an interface for applying force from the archwire, or other power modules, to the tooth, inducing orthodontic tooth movement. Brackets are adhered to the labial/buccal or lingual/palatal surface of the teeth using a bonding material. Their main duty is to hold the archwire in position, as well as to provide an interface for the archwire to apply force to the tooth when engaged. Orthodontic brackets usually include the following components: 1. Bracket base, which gets attached to the surface of the tooth using a bonding material 2. The archwire slot, which provides an interface for keeping the archwire in position and applying force from the archwire to the tooth, and 3. Tie wings, which are used for securing the archwire into the slot using metal or elastomeric rings, or self-ligatory caps. The force applied from the archwire to the bracket and consequently to the tooth induces tooth movement for correcting misalignments of the teeth.

Most brackets are placed on the buccal side of the tooth. The base of the bracket usually comes in rectangular shape, even though other shapes such as triangular also exist and may be used depending on the shape of the crown. The bonding side of the bracket usually has a meshed or patterned surface, allowing the bonding material to keep the bracket attached to the surface of the tooth. The facial side of the bracket usually includes the archwire slot and the wings. The wings are equal in size and may come in contact with the archwire within the slot during orthodontic tooth movement. Brackets placed in the lingual side of the tooth also exist.

In conventional brackets, there are usually four wings in rectangular shape and in equal size, with two positioned coronally and two positioned gingivally in the bracket. In some cases, brackets may come with a power arm, which is positioned gingivally (toward the gums). A power arm is like a handle with a bulky end, which helps redirect orthodontic forces for modifying the type of tooth movement. Power arms are optional and do not exist in all brackets because they can cause damage to the oral soft tissues. Even though they may occasionally be used on canines and premolar teeth, using brackets with power arms is case-dependent. It is possible that during a fixed orthodontic treatment, a bracket with a power arm is not used at all.

### Resistance to sliding in orthodontic tooth movement

Archwires used in orthodontic braces can come in rectangular or round cross-section and different sizes depending on the orthodontic treatment stage. The width of archwires used is usually smaller than the bracket slot. The smaller the width of the archwire is, the higher the archwire play in the bracket slot.

During an orthodontic treatment, forces of resistance counter the forces applied to induce tooth movement, restricting optimal sliding. Forces of resistance play an important role in the movement of the teeth and the success of orthodontic treatments. Forces of resistance oppose tooth movement, and to account for these forces, a higher amount of force needs to be applied to move the teeth, which can be harmful to oral soft and hard tissues. Therefore, minimizing forces of resistance in orthodontic treatment is imperative, since it reduces the required amount of force to move the teeth, therefore minimizing the adverse impact of the orthodontic treatment to the oral tissues, increasing treatment efficiency, and reducing treatment time.

Forces of resistance include: 1. Friction, which is the resistive force between two contact surfaces and is proportional to the surface area in contact, 2. Binding, which occurs when the wire flexes around the tie wing during orthodontic treatment, and 3. Notching, which occurs when the sharp corner of the tie wing forms a notch in the wire and gets caught in the formed notch, countering tooth movement until a significant force releases the tie wing corner from the notch or if the orthodontist intervenes directly (e.g., by fully changing the wire).

Friction is the resistive force between two contact surfaces (the surface of the wire and the bracket slot surfaces) which restricts movement of the teeth during orthodontic treatment. The amount of frictional force is proportional to the amount of force being applied to each tooth, such that F = µN, where µ is the coefficient of friction. Studies have revealed several variables contributing to frictional resistance in orthodontic sliding mechanics, including the archwire and bracket material, the area and roughness of the contact surfaces, and type of ligation.

In dental braces, friction refers to the counteracting forces in the contact surface between the archwire and the bracket slot, wings, and ligature. Friction was previously thought to be the most significant factor contributing to resistance in sliding mechanics in orthodontics. This presumption served as a basis for introducing different types of brackets, including self-ligating brackets. However, research has revealed that both the force applied to move the tooth and the resisting forces change as the tooth moves during orthodontic treatment, and depending on the treatment stage, other forces of resistance may have a more significant role.

The role of each of the abovementioned forces of resistance differs depending on the stage of orthodontic tooth movement. At the beginning of the tooth movement, when the wire has not yet bind, the tooth moves and tips in response to the force applied to its crown. In this stage, the role of friction contributes most significantly to resisting orthodontic movement. However, soon after the tipping begins, the wire flexes as it comes into contact with the corners of the bracket wings, which is referred to as "binding". Binding is known to be more of a binding-and-releasing phenomenon than the friction of two surfaces and therefore is evaluated separately from friction.

Persistent binding can lead to permanent deformation of the archwire as the sharp edge of the wing introduces a 'notch' in the wire. This phenomenon is referred to as 'notching' or 'inelastic binding', which occurs when wire, bracket, or both, become physically deformed. Notching stops tooth movement because the notch in the wire gets caught on the corner of the bracket wings. The tooth movement will resume only after enough masticatory forces have been applied to release the bracket corner from the wire notch. Yet, even after the release of the notch, bending can reoccur and lead to formation of other notches, which will stop tooth movement again until adequate masticatory forces lead to the release of the notch once more. Sometimes even masticatory forces will not be enough to release the notch from the wing edge. In these cases, the orthodontist may have to intervene by attempting to correct the physical form of the wire or to change the wire completely.

The role of friction, binding and notching differs at different stages of tooth movement. When there is no binding, friction seems to have the most prominent role in resistance to sliding. However, as binding occurs and the bracket-wire angulation increases, the role of friction in resisting orthodontic tooth movement becomes negligible. The more the wire-bracket angulation increases, the more significant the role of binding will become. A study by Articolo and Kusy revealed that with 7% angulation, binding constituted 80% of the resistance force. When the angulation increased to 13%, binding constituted around 99% of the resistance force, leaving the contribution of friction to resistance at less than 1%.

As the wire-bracket corner angulation further increases, the corner of the bracket forms a notch in the wire. At this stage, notching becomes the most significant factor resisting tooth movement, and the role of both friction and binding in sliding resistance becomes negligible.

The magnitude of frictional forces is directly correlated with the size, material, and surface roughness of the wire, the magnitude of the applied force, amount of contact surface area between the archwire and the bracket slot, and roughness of contact surfaces within the slot. Therefore, minimizing contact surface area, roughness of surfaces within the slot, and reducing the wire size are approaches to diminish friction and consequently accelerate treatment while minimizing its adverse effects on teeth and their adjacent tissues. Yet, the magnitude of binding and notching mostly depends on the sharpness of the edges of the slot surface of the wings in a bracket. Therefore, the shape of the wings and the sharpness of their corners significantly contribute to forces of resistance. One way to tackle this issue is to modify the shape of the slot portion of the wings in brackets to minimize binding and notching as much as possible.

While different bracket structures have been introduced to account for friction in orthodontic tooth movement, such as self-ligatory brackets, less attention has been paid to the role of binding and notching in orthodontic tooth movement. While friction relates to factors such as roughness and area of contact surfaces, binding and notching mostly relate to the sharpness of the bracket and tie wing corners. However, no bracket has yet been designed for minimizing binding and notching in orthodontic tooth movement. Conventional brackets usually have components that come with rectangular wings with sharp corners and edges and relatively high contact surface area. Not only do the high contact surfaces in conventional brackets restrict tooth movement, but also the sharp corners and edges of the rectangular brackets and their wings introduce significant points of binding and notching in the wire, significantly increasing resistance to orthodontic sliding mechanics.

There is thus a need for an orthodontic bracket with mechanical characteristics that minimize forces of resistance during orthodontic tooth movement which overcome the drawbacks of the prior art orthodontic brackets.

### SUMMARY OF THE INVENTION

The shortcomings of the prior art are generally mitigated by an orthodontic bracket with an angular base reducing forces of resistance, improving treatment efficiency, and minimizing treatment duration.

In one aspect of the invention, an orthodontic bracket system generally aiming at reducing forces of resistance, improving treatment efficiency, and/or minimizing treatment duration is provided.

In some aspects of the invention, the orthodontic bracket comprises three tie wings, with two positioned coronally and one gingivally at approximately the midpoint between the coronal wings. Unlike conventional brackets with four wings, the orthodontic bracket aims at mitigating the pinch effect, which occurs when the archwire is compressed between opposing tie wings, leading to increased binding and resistance. Additionally, the slot portions of the tie wings facing the bracket slot are generally rounded rather than angular form, significantly reducing contact surface area and forces of resistance between the archwire and the bracket.

It should be understood that throughout this description, references to the coronal or gingival positioning of the bracket components, such as the tie wings, are provided for clarity based on the illustrated orientations. However, these positions are relative and may be interchanged depending on the specific clinical application or the orientation of the bracket upon installation. Consequently, any component described as being positioned coronally may instead be positioned gingivally, and vice versa, without departing from the scope of the present invention.

In another aspect of the invention, the orthodontic bracket features four tie wings, similar to traditional brackets but incorporating rounded slot portions rather than rectangular ones. The contact surface between the archwire and the tie wings are reduced compared to prior art systems. Additionally, the slot base may include two semicylindrical prominences, which further decrease the contact area between the archwire and the bracket slot. The prominences generally reduce the need for excessive force during orthodontic treatment, minimizing adverse effects such as root resorption and unnecessary stress on the periodontal ligament.

In a further aspect of the invention, an orthodontic bracket is provided. The bracket comprises a bracket base attachable to a surface of a tooth and two first tie wings opposed one second tie wing to form a bracket slot to receive an archwire, each tie wing being attached to the bracket base, the second tie wing being positioned without intersecting with the first tie wings.

The tie wings may be shaped with rounded corners facing the bracket slot to reduce friction with the archwire and minimize resisting forces. The tie wings may have a semi-cylindrical shape facing the bracket slot. The first tie wings may be coronal and the second tie wing being gingival.

The bracket base having a triangular shape. The base of the triangular bracket base may be positioned coronally and an apex of the triangular bracket base may be positioned gingivally. The second tie wing may be at about a midpoint between the two first tie wings.

The bracket slot base may comprise two prominences between the two first tie wings and the second tie wing, the prominences being shaped to reduce contact surface between the archwire and the slot base. The prominences may be rounded or may have semicylindrical shape. Each of the prominences may comprise a first end connected to one of the first tie wings and a second end connected to the second tie wing. A first of the prominences may be connected to a first of the first tie wings and a second of the prominences being connected to a second of the first tie wings.

The dimensions of each of the two first tie wings may differ from dimensions of the second tie wing.

In another aspect of the invention, an orthodontic bracket is provided. The bracket comprises a bracket base attachable to a surface of a tooth and two first tie wings and one or more second tie wings, each tie wing being attached to the bracket base and being shaped with rounded corners facing a bracket slot formed by the tie wings to receive an archwire and to reduce resisting forces with the archwire to be received.

The tie wings may have a semi-cylindrical shape facing the bracket slot. The two first tie wings may be coronal and the one or more second tie wing may be gingival.

In yet another aspect of the invention, an orthodontic bracket is provided. The bracket comprises a bracket base attachable to a surface of a tooth, two first tie wings and one or more second tie wings, each tie wing being attached to the bracket base, the tie wings forming a bracket slot to receive an archwire and two prominences between the two first tie wings and the one or more second tie wings, the prominences being shaped to reduce contact surface between the archwire to be received and the slot base.

The prominences may be rounded or may have a semicylindrical shape. The two first tie wings may be coronal and the one or more second tie wings being gingival.

Other and further aspects and advantages of the present invention will be obvious upon an understanding of the illustrative embodiments about to be described or will be indicated in the appended claims, and various advantages not referred to herein will occur to one skilled in the art upon employment of the invention in practice.

### BRIEF DESCRIPTION OF THE DRAWINGS

The above and other aspects, features and advantages of the invention will become more readily apparent from the following description, reference being made to the accompanying drawings in which:
FIG. 1 is a schematic representation of an orthodontic bracket with a triangular base, three wings, and a power arm according to the principles of the present invention.
FIG. 2 is a schematic representation of an orthodontic bracket with a rectangular base, three wings, and a power arm according to the principles of the present invention.
FIG. 3 is a perspective 3D representation of the orthodontic bracket of FIG. 1.
FIG. 4 is a perspective 3D representation of the orthodontic bracket of FIG. 2.
FIG. 5 is a front schematical view of an embodiment of an orthodontic bracket comprising four wings in accordance with the principles of the present invention.
FIG. 6 is a prior art illustration of the contact surface between four rectangular wings and a rectangular wire as known in the prior art, and is provided for comparative purposes only.
FIG. 7 is a prior art illustration of the contact surface between four rectangular wings and a round wire.
FIG. 8 is an illustration of the contact surface between three semicylindrical wings and a rectangular wire in accordance with the principles of the present invention.
FIG. 9 is an illustration of the contact surface between three semicylindrical wings and a round wire in accordance with the principles of the present invention.
FIG. 10 is a prior art illustration of the contact surface between a rectangular wire and a flat slot base as known in the prior art, and is provided for comparative purposes only in.
FIG. 11 is a prior art illustration of the contact surface between a round wire and a flat slot base.
FIG. 12 is an illustration of the contact surface between a rectangular wire and a slot base with two semicylindrical prominences in accordance with the principles of the present invention.
FIG. 13 is an illustration of the contact surface between a round wire and a slot base with two semicylindrical prominences in accordance with the principles of the present invention.
FIG. 14 is a top view of contact surface between a round wire and a slot base with two semicylindrical prominences in accordance with the principles of the present invention.

### DETAILED DESCRIPTION OF THE INVENTION

A novel orthodontic bracket system will be described hereinafter. Although the invention is described in terms of specific illustrative embodiments, it is to be understood that the embodiments described herein are by way of example only and that the scope of the invention is not intended to be limited thereby.

The proposed orthodontic bracket comes with features that minimize forces of resistance, increase treatment efficiency and reduce treatment time. The proposed orthodontic bracket system is described below.

The portion of wings facing the slot are rounded and may come in semicylindrical shape instead of the conventional rectangular format.

Instead of four wings, the proposed bracket comprises three wings, two being placed coronally and one being placed gingivally, located about at the middle of the distance between the coronal ones. Understandably, in other embodiments, two wings may be placed gingivally and one may be placed coronally. Furthermore, in another embodiment, the dimensions of the gingivally wing and of the coronally wings may differ from one another. As such, the coronally wings may cover a larger area than the gingivally wing, or vice versa.

In a preferred embodiment, the slot base in the proposed bracket comprises two rounded or smooth prominences, connecting the coronal wings to the gingival wing(s). In some embodiments, the prominences may be semicylindrical.

The proposed orthodontic bracket system may incorporate only one of the aforementioned components or may involve a combination of any of the three components mentioned above.

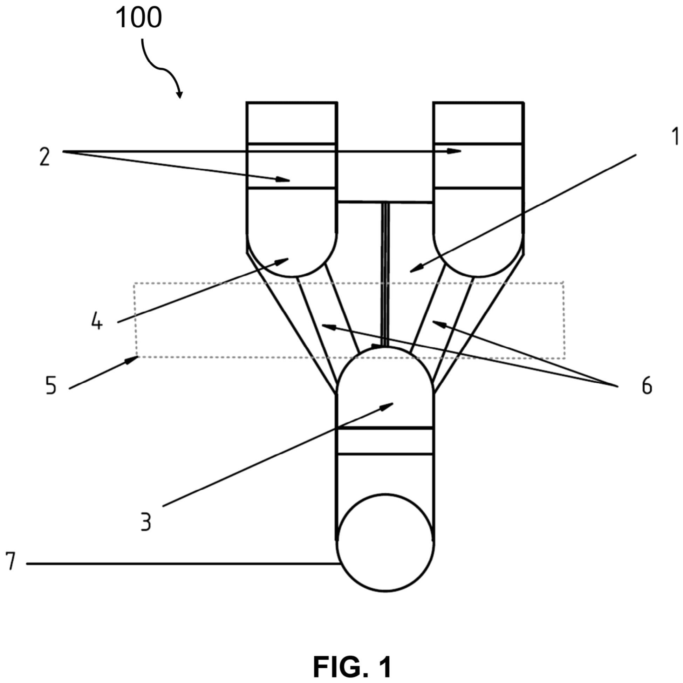

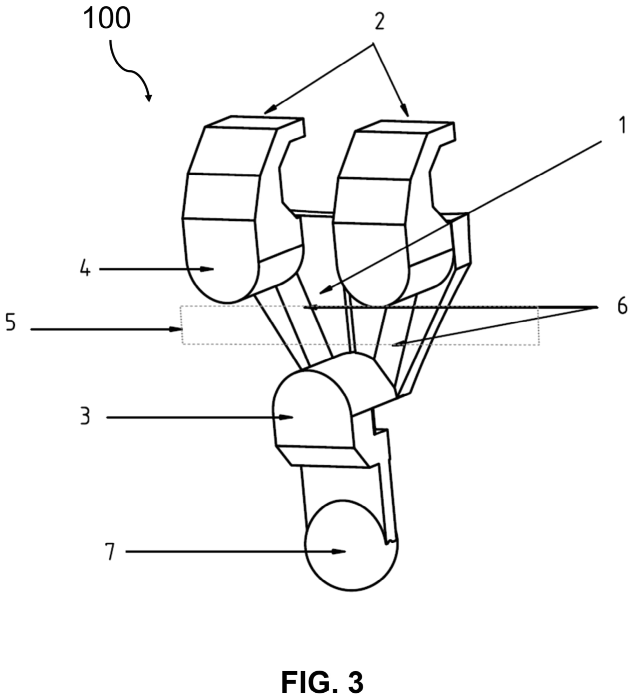

Referring now to FIGS. 1 and 3, an embodiment of an orthodontic bracket 100 comprising a triangular base 1 is illustrated. The orthodontic bracket is configured so the base of the triangle 1 is positioned coronally (i.e. towards the crown) and the apex of the triangle 1 is positioned gingivally (i.e. towards the gums). Prior art orthodontic brackets generally comprise four tie wings. The orthodontic bracket as embodied comprises three tie wings 2, 3, two wings being positioned coronally 2 and one wing being positioned gingivally 3 about at the middle of the distance between the two coronal wings. Each tie wing generally comprises a slot portion 4. The slot portion 4 may be rounded to mitigate negative effects of friction, binding, and/or notching. The bracket further comprises a bracket slot 5. The bracket slot 5 allows the wire to be positioned and secured to the bracket 100, generally aiming at inducing tooth movement. The bracket slot 5 may comprise prominences 6 at the base of the bracket slot 4. The prominences 6 are generally semicylindrical and may be positioned diagonally and may connect the coronal wings 2 to the gingival wing 3. The prominences 6 generally aim at reducing friction by limiting contact between the archwire and the bracket slot 5 to two lines. The bracket 100 as illustrated comprises a power arm 7, which is optional. The use of the bracket 100 with the power arm 7 is treatment dependent.

The bracket design can be implemented using any material typically employed in manufacturing orthodontic brackets. These materials include stainless steel, titanium, ceramics, and medical-grade polymers, among others. While this invention does not require a specific material, it is noted that the choice of material may influence the performance and durability of the bracket.

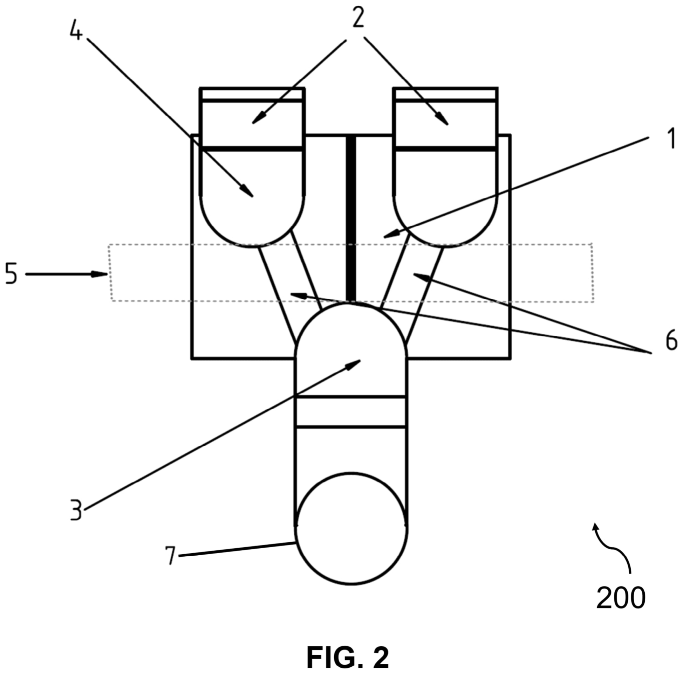

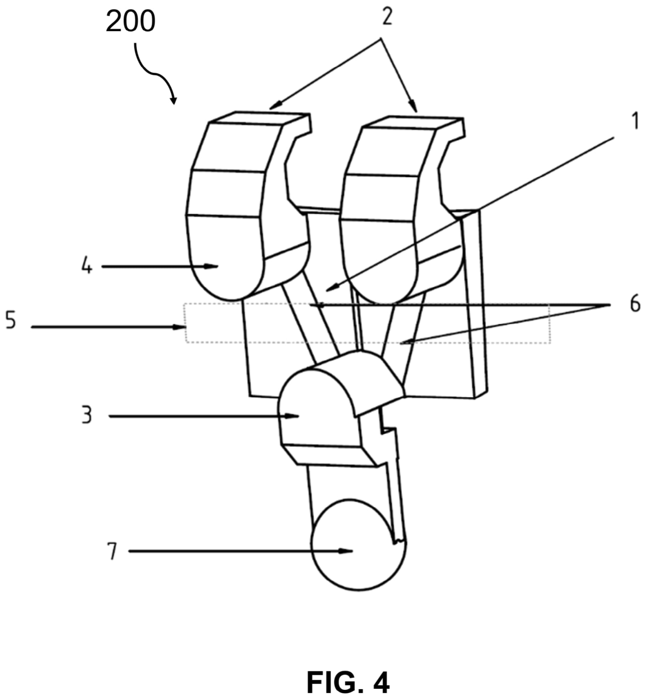

Referring now to FIGS. 2 and 4, another embodiment of the orthodontic bracket 200 is illustrated. In such embodiment, the orthodontic bracket 200 comprises a rectangular base 1 and three tie wings 2, 3. Similarly to FIG. 1, two of the wings 2 are positioned coronally and one of the wings 3 is positioned gingivally, about the middle of the distance between the two coronal wings. Similar to the embodiment of FIG. 1, the slot portion 4 of the tie wings 2, 3 are adapted to mitigate negative effects of friction, binding, and/or notching. As such, the slot portion 4 of the tie wings 2, 3 is preferably rounded or has a semicylindrical shape. Understandably, any other shape to reduce the negative effects of friction, binding and/or notching, such as smooth surface or rounded protuberances may be used within the scope of the present invention.

Unlike conventional brackets that comprise rectangular wings having sharp corners and edges, the slot portions of the tie wings 4 facing the slot of the embodied brackets 100 or 200 are rounded. In other embodiments, the slot may have a semicylindrical shape or any other rounded or edge-free shape. The roundness of the slot portions of the tie wings has a range of benefits. Amongst others, it first generally aims at significantly reducing the contact surface area between the archwire and the tie wings in the archwire slot and therefore reducing friction. Moreover, the roundness of the slot portion of the tie wings generally aims at minimizing binding and/or preventing notching by eliminating sharp corners that could form a notch in the wire. The roundness of the slot portion may further reduce resistance forces in orthodontic tooth movement, lowering the force required, minimizing orthodontic treatment adverse effects, and shortening treatment time.

In brackets comprising rectangular wings, the slot portion of the wings is also rectangular, which comes in contact with the archwire. Therefore, if rectangular archwires are used, the contact surface between each wing and the archwire is an area, which can get as high as the length of the slot surface of the wing (a), multiplied by the archwire width (b). The contact surface area can get as high as a*b*4 in brackets comprising four wings. If round archwires are used, the contact surface between each wing and the archwire will be a line, which can get as high as the length of the wing's slot surface (a). In embodiments of brackets comprising four wings, the contact surface between the wings and the round archwire can be as high as four lines, each as high as the length of the wing's slot surface (a).

On the other hand, when the slot portion of wings is semicylindrical, the contact surface between the wings and the archwire will be less than that of brackets with rectangular wings. If rectangular archwires are used, the contact surface between each wing and the archwire will be a line at max, each getting as high as the width of the archwire (b). With four wings in a bracket, the contact surface between the wings and the archwire will be four lines, each getting as high as the width of the archwire (b). If round archwires are used, the contact surface between each wing and the archwire will be reduced to one point, reducing the contact surface of the wings with the archwire to four points in a bracket. This reduction in contact surface significantly reduces frictional forces which might resist optimal orthodontic movement.

Moreover, in conventional brackets with four rectangular tie wings, the two coronal wings being positioned right in front of the two gingival wings causes a "pinch effect". The pinch effect occurs when a flexible object gets deformed when positioned between two rigid structures, which in this case are the coronal and gingival tie wings. The pinch effect in conventional brackets with four tie wings also contributes to binding and notching, preventing optimal orthodontic tooth movement. The proposed bracket aims to mitigate for the pinch effect by having three tie wings instead of four. In the proposed bracket, there are two coronal wings and one gingival wing, with the gingival wing placed in the middle of the distance between the two coronal wings. This design ensures that none of the wings are directly facing each other, preventing tie wings from exerting a pinch effect on the wire, further reducing forces of binding. Moreover, using three wings instead of four reduces the contact surface between the wings and the archwire from four (4) lines to three (3) lines when rectangular wires are used, and from four (4) points to three (3) points when round wires are used, further diminishing friction between the wires and the slot portion of the wings.

In conventional brackets, the base of the slot is not completely flat, as it obeys the curvature of the tooth crown. However, during orthodontic tooth movement, the wire can have a significant contact area with the bracket slot, which can get as high as being in full contact with the bracket slot. Such high contact surface area between the archwire and the bracket slot can induce significant frictional forces during orthodontic movement. Moreover, the archwire having a high contact surface area with the bracket slot may lead to the orthodontist applying additional forces to the tooth, which can lead to the resorption of the tooth root(s). Excessive applied force caused by the high contact surface area between the slot base and the archwire not only disrupts the orthodontic treatment but can also cause permanent and irreversible damage to the tooth structure. In this context, an excessive applied force may be defined by a force that surpasses the optimal force, where the optimal force is determined by the capillary pressure of the periodontal ligament (PDL) divided by the surface area on which the force acts. Therefore, the proposed bracket employs two semicylindrical prominences in the base of the bracket slot to reduce the contact surface area between the archwire and the bracket slot, and consequently, account for the aforementioned shortcomings. The bracket 100 or 200, as embodied, comprises two rounded prominences 6, such as semicylindrical, in the base of the slot, which connect slot portion of the coronal wings 2 to the gingival wing(s) 3. In the proposed bracket with three wings, one semicylindrical prominence connects the distocoronal wing to the gingival wing, and the other connects the mesiocoronal wing to the gingival wing. These prominences 6 reduce the contact surface between the archwire and the slot base - instead of the wire being in full contact with the slot base, it only comes into contact with the semicylindrical prominences, reducing the contact surface area and therefore reducing friction. If rectangular wires are used, the semicylindrical prominences at the base of the slot will reduce the contact area between the slot base and the archwire to two lines at max. If round archwires are used, this contact area is further reduced to two points. Such reduced contact surface area further reduces the negative impact of resisting forces in orthodontic tooth movement. This is while the rectangular format of the archwire slot has been preserved to enable particular orthodontic movements.

The proposed bracket having the proposed features can come in different bracket base shapes, including rectangular and triangular, and may comprise a power arm 7, depending on the tooth and the use cases of the orthodontic treatment. Furthermore, the archwire can be secured to the bracket by engaging an elastomeric ring or a stainless-steel ligature wire into the notches of the tie wings; or can come with a self-ligatory cap.

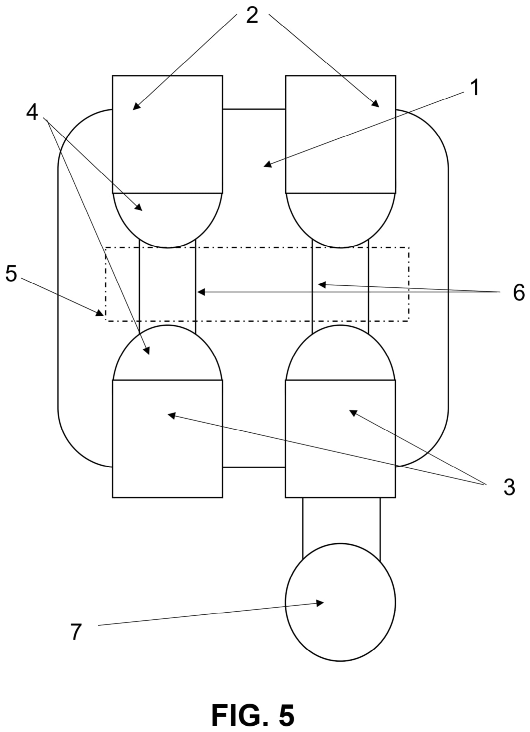

Referring now to FIG. 5, another embodiment of the orthodontic bracket 200 is illustrated, featuring a configuration of four tie wings 2, 3. In this arrangement, two wings 2 are positioned coronally and two wings 3 are positioned gingivally. Similar to the embodiments shown in FIG. 1 and FIG. 2, the slot portions 4 of the four tie wings are rounded, such as but not limited to a semicylindrical shape, to minimize the contact surface area with the archwire. Such configuration allows for the enhanced rotational control of a traditional four-wing bracket while utilizing the rounded geometry to significantly reduce friction, binding, and notching. By employing four semicylindrical tie wings, the contact surface is limited to four lines when using rectangular archwires and reduced to four points when using round archwires, thereby facilitating more efficient orthodontic tooth movement. Furthermore, in yet another embodiment, the dimensions of the gingivally wings and of the coronally wings may differ from one another. As such, the coronally wings may cover a larger area than the gingivally wings, or vice versa.

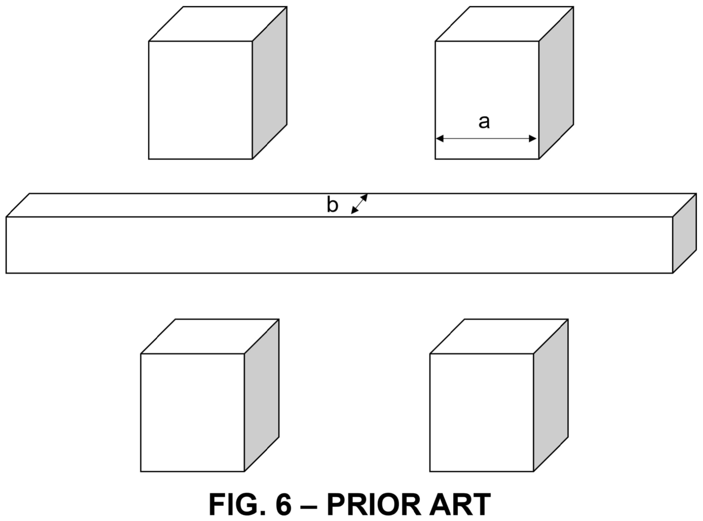

Referring now to FIG. 6, an illustration, as known in the prior art, of contact surface between a rectangular wire and four rectangular wings is provided. In such embodiment, the contact surface between the rectangular wire and the wings has an area of *a***b**4, where *a* is the length of a wing and b is the archwire width.

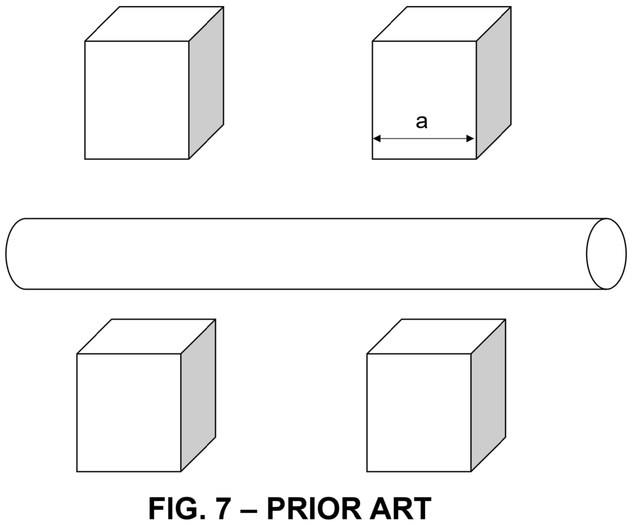

Referring to FIG. 7, an illustration, as known in the prior art, of contact surface between a round or cylindrical wire and four (4) rectangular wings is provided. In such embodiment, the contact surface between the round or cylindrical wire and the wings has an area of four lines, each line having a length of *a.* As such, the contact surface between the round wire and the wings has an area of *4***a**ε, where ε (epsilon) is the width of each contact line.

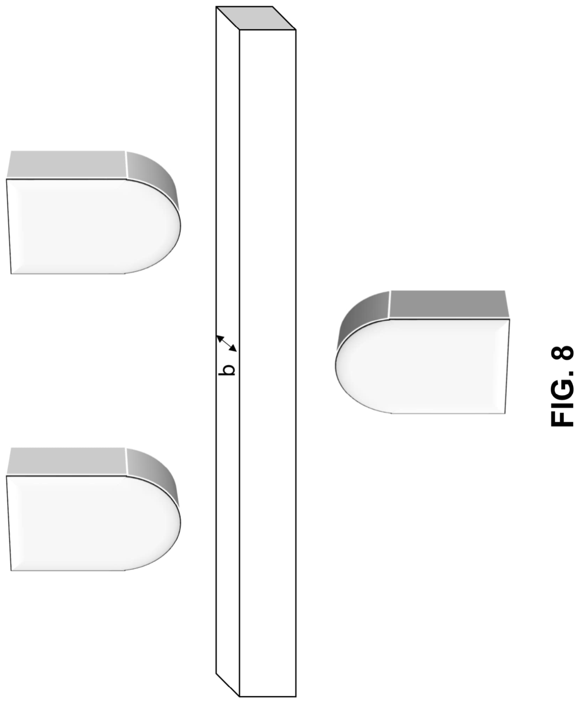

Referring to FIG. 8, an illustration of contact surface between a rectangular wire and three (3) semicylindrical wings is provided. In such embodiment, the contact surface between the rectangular wire and the wings has an area equivalent to three lines, each line being the archwire width *b.* As such, the contact surface has an area of 3**b**ε, where ε is the width of each contact line. Despite ε being zero in theory, in practice, the width of each contact line reflects manufacturing precision. However, because ε vanishes, the resulting contact surface remains infinitesimal and much smaller than that of rectangular wings as in FIG 6.

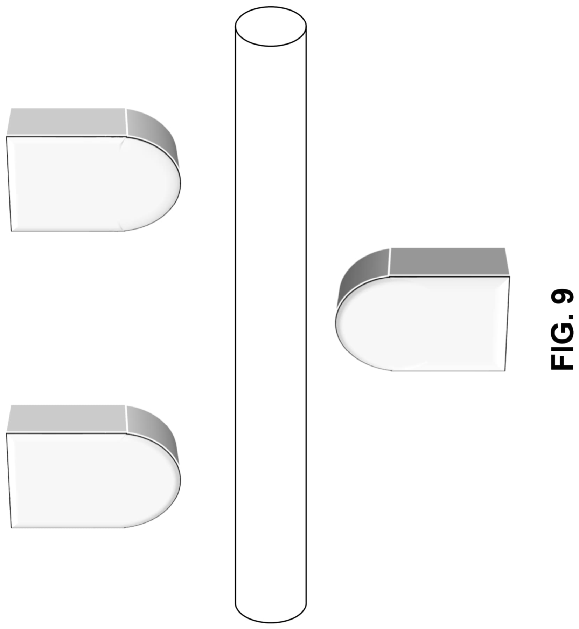

Referring to FIG. 9, an illustration of contact surface between a round or cylindrical wire and three (3) semicylindrical wings is illustrated. In such embodiment, the contact surface between the rounded or cylindrical wire and the wings comprises of three (3) points.

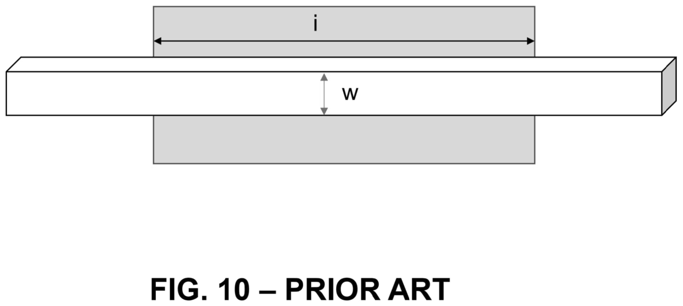

Referring now to FIGS. 10-14, embodiments of a flat slot base in an orthodontic bracket compared to a slot base having prominences are illustrated. In conventional brackets with no semicylindrical prominences in the bracket slot, if rectangular wires are used, the contact surface area between the archwire and the slot base can get as high as the slot length (i) multiplied by the wire height (w). If round wires are used, the contact will be a line, which can get as high as the slot length (i). On the other hand, in embodiments of the present invention, the two semicylindrical prominences in the base of the slot connecting the coronal wings to the gingival wings typically significantly reduce the contact surface between the archwire and the slot base, accounting for friction as well as the application of excessive forces to the tooth due to a high contact surface. The prominences may further reduce the binding and notching applied around the prominences. In some embodiments having semicylindrical prominences, if rectangular archwires are used, the contact between the archwire and the slot base is reduced to two lines, each equal to the length of the semicylindrical prominence that gets in contact with the archwire. If the height of the archwire is considered w, and the angle between the archwire and the semicylindrical prominence is *θ*, the contact line (x) equals to w/ sin *θ*. In embodiments having semicylindrical prominences in the bracket slot, if round or cylindrical archwires are used, the contact between the archwire and the bracket slot is reduced to two points, one for each semicylindrical prominence.

Referring now to FIG. 10, an illustration, as known in the prior art, of contact surfaces of an embodiment of a conventional orthodontic bracket comprising a flat slot base and fitted with a rectangular wire is illustrated. In such embodiment, the contact between the rectangular wire and the base has an area of *i***w*, where i is the slot length and w is the wire height.

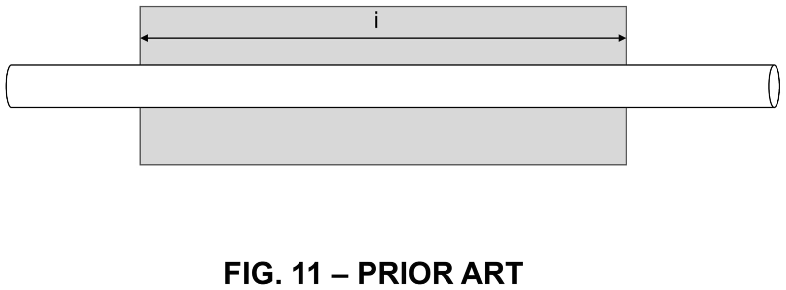

Referring now to FIG. 11, an illustration, as known in the prior art, of contact surfaces of an embodiment of a conventional orthodontic bracket comprising a flat slot base and fitted with a round or cylindrical wire is illustrated. In such embodiment, the contact between the round or cylindrical wire and the base has an area equivalent to a line of the slot length (i).

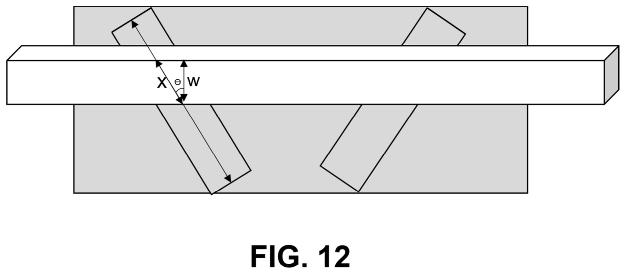

Referring now to FIG. 12, an illustration of contact surfaces of an embodiment of the proposed orthodontic bracket comprising a slot base with semicylindrical prominences and fitted with a rectangular wire is illustrated. In such embodiment, the contact between the rectangular wire and the slot base is equivalent to two lines of x. As such the contact surface is x = w/ sin *θ*, where w is the wire height and *θ* the angle between the line x and the height w.

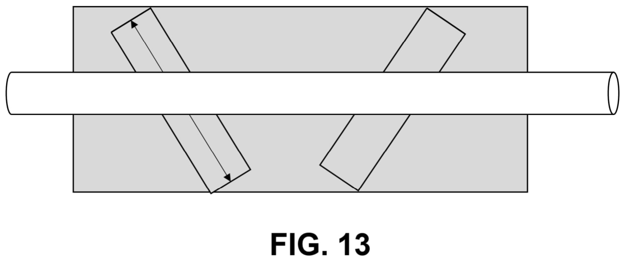

Referring now to FIG. 13, an illustration of contact surfaces of an embodiment of the proposed orthodontic bracket comprising a slot base with semicylindrical prominences and fitted with a round or cylindrical wire is illustrated. In such embodiment, the contact between the round or cylindrical wire and the slot base is equivalent to two points.

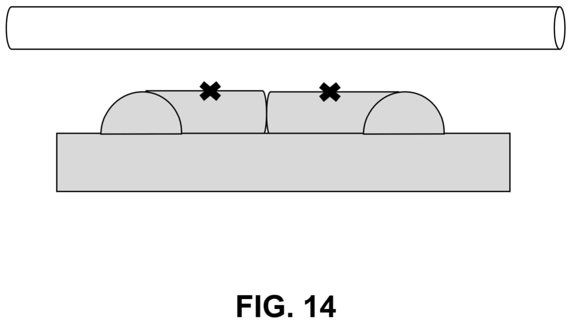

Referring now to FIG. 14, an illustration of contact surfaces of an embodiment of an orthodontic bracket comprising a slot base with semicylindrical prominences and fitted with a round or cylindrical wire is illustrated. In such embodiment, the contact between the round wire and the slot base is also equivalent to two points.

While illustrative and presently preferred embodiments of the invention have been described in detail hereinabove, it is to be understood that the inventive concepts may be otherwise variously embodied and employed and that the appended claims are intended to be construed to include such variations except insofar as limited by the prior art.

## Claims

1. An orthodontic bracket comprising:
a bracket base attachable to a surface of a tooth;
two first tie wings opposed one second tie wing to form a bracket slot to receive an archwire, each tie wing being attached to the bracket base, the second tie wing being positioned without intersecting with the first tie wings.

2. The bracket of claim 1, the tie wings being shaped with rounded corners facing the bracket slot to reduce friction with the archwire.

3. The bracket of claim 1 or 2, the first tie wings being coronal and the second tie wing being gingival.

4. The bracket of any one of claims 1 to 3, the bracket base having a triangular shape.

5. The bracket of claim 4, wherein a base of the triangular bracket base is positioned coronally and an apex of the triangular bracket base is positioned gingivally.

6. The bracket of any one of claims 1 to 5, wherein the second tie wing is at about a midpoint between the two first tie wings.

7. The bracket of any one of claims 1 to 6 further comprising two prominences between the two first tie wings and the second tie wing, the prominences being shaped to reduce contact surface between the archwire and the slot base.

8. The orthodontic bracket system of claim 7, the prominences being rounded or having semicylindrical shape.

9. The bracket of claim 7 or 8, each of the prominences comprising a first end connected to one of the first tie wings and a second end connected to the second tie wing.

10. The bracket of claim 9, a first of the prominences being connected to a first of the first tie wings and a second of the prominences being connected to a second of the second tie wing.

11. An orthodontic bracket comprising:
a bracket base attachable to a surface of a tooth;
two first tie wings and one or more second tie wings, each tie wing being attached to the bracket base and being shaped with rounded corners facing a bracket slot formed by the tie wings to receive an archwire and to reduce friction with the archwire to be received.

12. An orthodontic bracket comprising:
a bracket base attachable to a surface of a tooth;
two first tie wings and one or more second tie wings, each tie wing being attached to the bracket base, the tie wings forming a bracket slot to receive an archwire; and
two prominences between the two first tie wings and the one or more second tie wings, the prominences being shaped to reduce contact surface between the archwire to be received and the slot base.

13. The bracket of claim 12, the prominences being rounded or having a semicylindrical shape.

14. The bracket of any one of claims 1 to 13, the tie wings having a semi-cylindrical shape facing the bracket slot.

15. The bracket of claim any one of claims 1 to 14, the two first tie wings being coronal and the one or more second tie wings being gingival.
